# EUROPÄISCHE PATENTANMELDUNG

(11) **EP 1 962 058 A2**
(43) Veröffentlichungstag der Anmeldung: **27.08.2008**
(21) Anmeldenummer: 08002398.9
(22) Anmeldetag: 08.02.2008
(51) Int. Cl.: G01C 21/26

(54) **Verfahren zur Ermittlung einer Position von Fahrspuren eines mehrspurigen Fahrweges**

(30) Priorität: 26.02.2007 DE 102007009638
(71) Anmelder: Deutsches Zentrum für Luft- und Raumfahrt e.V., 51147 Köln (DE)
(72) Erfinder: Noyer, Ulf, 38110 Braunschweig (DE); Niehoff, Nico, 38173 Sickte (DE)
(74) Vertreter: Gerstein, Hans Joachim

(57) **Zusammenfassung**

Die Erfindung betrifft ein Verfahren zur Ermittlung einer Position von Fahrspuren eines mehrspurigen Fahrweges, wobei zunächst die Position einer ersten Fahrspur des mehrspurigen Fahrweges ermittelt wird und anschließend die Position mindestens einer weiteren Fahrspur des mehrspurigen Fahrweges in Abhängigkeit der ermittelten Position der ersten Fahrspur bestimmt wird.

## Beschreibung

Die Erfindung betrifft ein Verfahren zur Ermittlung einer Position von Fahrspuren eines mehrspurigen Fahrweges.

Zum Erstellen von digitalen Karten ist es u.a. notwendig, dass die Positionen der in die digitale Karte einzutragenden Fahrwege, wie zum Beispiel Straßen oder Schienen, bekannt sind. Um diese Positionen zu erhalten, werden die entsprechenden Fahrwege vermessen, indem ein umgebautes Fahrzeug, das zumindest mit einem Ortungssystem, insbesondere einem Satellitenortungssystem, ausgerüstet ist, die zu vermessenden Fahrwege abfährt. Während des Abfahrens des Fahrweges werden dabei eine Vielzahl von Messwerten ermittelt, welche die Position des Fahrweges an der bestimmten Stelle repräsentieren.

Um ein möglichst genaues Abbild des entsprechenden Fahrweges zu erhalten, ist es weiterhin notwendig, dass bei mehrspurigen Fahrwegen die Positionen der einzelnen Fahrspuren bekannt sind. Das aus dem Stand der Technik bekannte Verfahren hat dabei den Nachteil, dass jede Fahrspur des mehrspurigen Fahrweges einzeln vermessen werden muss, um die Positionen der einzelnen Fahrspuren zu erhalten. Dies kann zum einen dadurch geschehen, dass jede Fahrspur einzeln vermessen wird, was zu einem großen Aufwand führt. Es ist aber auch denkbar, dass mit einer Messfahrt alle Fahrspuren des mehrspurigen Fahrweges vermessen werden, was jedoch zwingend voraussetzt, dass die anderen Fahrspuren frei sein müssen. Dies erfordert in aller Regel eine Straßensperrung, was sowohl zu Behinderungen des Straßenverkehrs als auch zu enormen Kosten führt.

Im Lichte dieser Problematik ist es Aufgabe der Erfindung, ein verbessertes Verfahren zur Vermessung mehrspuriger Fahrwege anzugeben.

Die Aufgabe wird erfindungsgemäß mit dem Verfahren der eingangs genannten Art gelöst durch Ermitteln der Position einer ersten Fahrspur des mehrspurigen Fahrweges und Bestimmen der Position mindestens einer weiteren Fahrspur des mehrspurigen Fahrweges in Abhängigkeit der ermittelten Position der ersten Fahrspur und der festgelegten Normbauweise von Fahrwegen.

Der vorliegenden Erfindung liegt demnach die Idee zugrunde, aus der bekannten Position einer Fahrspur auf die Positionen der anderen Fahrspuren des mehrspurigen Fahrweges zu schließen. Vorteilhafterweise wird die Fahrspur, von der ausgehend die Positionen der anderen Fahrspuren bestimmt werden soll, zunächst vermessen. Dies kann zum Beispiel dadurch geschehen, dass ein speziell umgebautes Fahrzeug die zu vermessende Fahrspur abfährt und so die Position der Fahrspur ermittelt. Anschließend kann dann auf Grundlage der Position dieser Fahrspur auf die Positionen der anderen Fahrspuren geschlossen werden.

Vorteilhafterweise bezieht sich die Position einer Fahrspur auf eine der Fahrspurbegrenzungslinien. Als Fahrspurbegrenzungslinien sind die Linien gemeint, welche die Fahrspur links und rechts begrenzen und die Breite der Fahrspur festlegen. In Kenntnis der Position einer solchen Fahrspurbegrenzungslinie eines Fahrweges ist es dann möglich, auf die Positionen der anderen Fahrspurbegrenzungslinien der anderen Fahrspuren zu schließen.

Ganz besonders vorteilhaft ist es, wenn die Position der rechten Fahrwegbegrenzungslinie des Fahrweges bekannt ist. Diese rechte Fahrwegbegrenzungslinie ist in der Regel eine, zumindest in Deutschland, weiße, durchgezogene Linie, welche die seitliche Begrenzung der Fahrbahn markiert. In Kenntnis der Position dieser rechten Fahrbahnbegrenzungslinie ist es dann möglich, auf die nächste Fahrspurbegrenzungslinie der anschließenden Fahrspur zu schließen, so dass die entsprechenden Position aller Fahrspuren auf diese Weise ermittelt werden kann.

Um von der Position einer Begrenzungslinie auf die Position einer anderen Begrenzungslinie zu schließen, ist es ganz besonders vorteilhaft, wenn bekannt ist, wie breit die einzelnen Fahrspuren sind. Bei Straßen, die nach der RAS-Q-Richtlinie gebaut werden, ist die Breite einer jeden Fahrspur bekannt, da die Richtlinie streng vorgibt, wie breit eine Straße bzw. wie breit die einzelnen Fahrspuren einer mehrspurigen Straße gebaut werden sollen. Dies ist insbesondere bei Autobahnen der Fall. Daher kann in Kenntnis der Position der rechten Fahrwegbegrenzungslinie mittels Koordinatentransformation und in Kenntnis der Breite der Fahrspur auf die nächste Begrenzungslinie geschlossen werden.

Anhand der beigefügten Zeichnungen wird die Erfindung beispielhaft näher erläutert. Es zeigen:
- Figur 1 -: schematische Darstellung einer dreispurigen Fahrbahn, bei der auf die Position der anderen Fahrspuren geschlossen wird;
- Figur 2 -: Querschnittdarstellung einer dreispurigen Autobahn im Regelquerschnitt RQ 37,5.

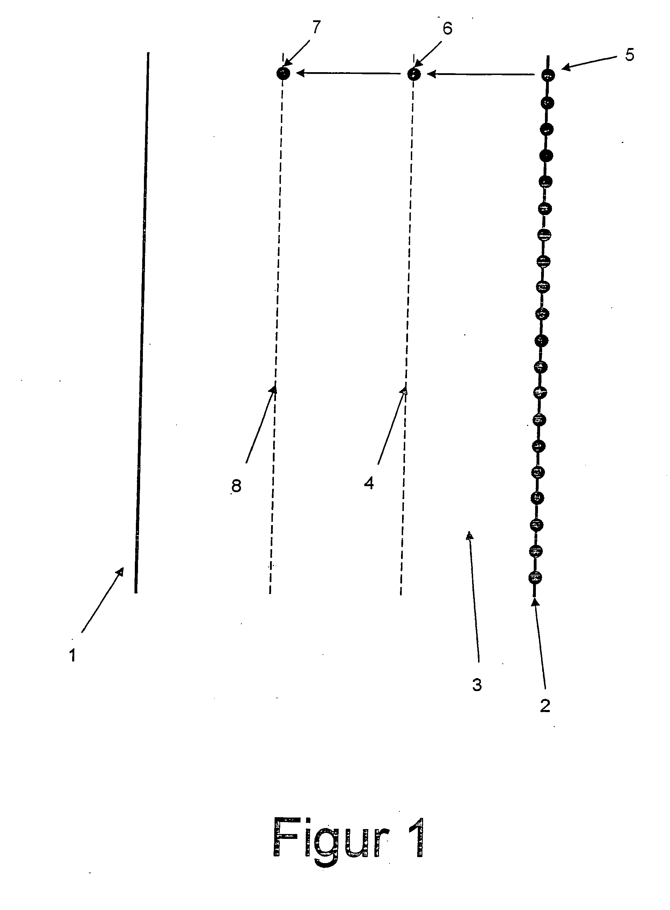

Figur 1 zeigt schematisch eine Darstellung einer dreispurigen Fahrbahn 1. Die Fahrbahn 1 wird rechts durch eine Fahrbahnbegrenzungslinie 2 begrenzt. Die einzelnen Fahrspuren 3 sind durch Fahrspurbegrenzungslinien 4 und 8 voneinander getrennt. In einem ersten Schritt wurde zunächst die rechte Fahrspur abgefahren und dabei die Position 5 der rechten Begrenzungslinie 2 ermittelt.

In Kenntnis der Breite der einzelnen Fahrspuren 3 des Fahrweges 1 kann dann auf die Position 6 der sich anschließenden Fahrspurbegrenzungslinie 4 geschlossen werden, indem die Position 5 der rechten Fahrbahnbegrenzungslinie 2 orthogonal um die Breite der Fahrspur verschoben wird. In Kenntnis der so ermittelten Position 6 der Fahrspurbegrenzungslinie 4 kann dann dieser Schritt wiederholt werden und die Position 7 der sich an die Fahrspurbegrenzungslinie 4 anschließenden Fahrspurbegrenzungslinie 8 ebenfalls ermittelt werden. Somit ist es möglich, in Kenntnis der Position einer einzigen Begrenzungslinie auf die Positionen der anderen Begrenzungslinien zu schließen und somit die Positionen der anderen Fahrspuren zu definieren, ohne sie vermessen zu müssen.

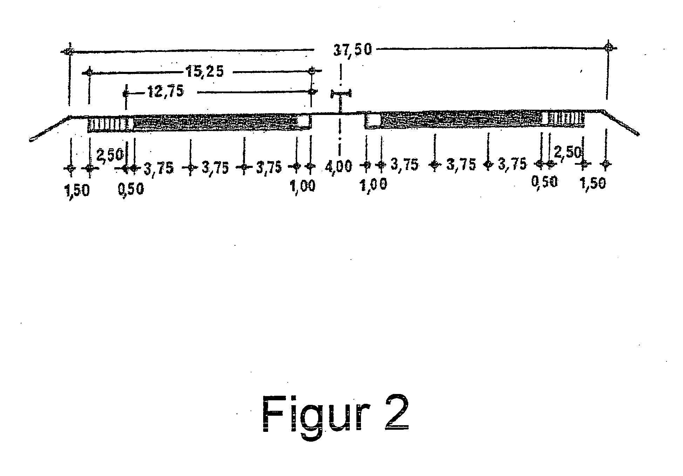

Figur 2 zeigt den Regelquerschnitt RQ 37,5 einer dreispurigen Autobahn. Daran ist zu erkennen, dass die einzelnen Fahrspuren 3,75 m breit. Die gesamte Breite der Fahrbahn beträgt 37,5 m. Ist bekannt, mit welchem Regelquerschnitt die Fahrbahn gebaut wurde, ist auch bekannt, wie breit die einzelnen Fahrspuren sind. Ein Ausmessen der einzelnen Fahrspurbreiten ist somit nicht mehr notwendig.

## Patentansprüche

1. Verfahren zur Ermittlung einer Position (5, 6, 7) von Fahrspuren (3) eines mehrspurigen Fahrweges (1), **gekennzeichnet durch** Ermitteln der Position (5) einer ersten Fahrspur (3) des mehrspurigen Fahrweges (1) und Bestimmen der Position (6, 7) mindestens einer weiteren Fahrspur (3) des mehrspurigen Fahrweges (1) in Abhängigkeit der ermittelten Position (5) der ersten Fahrspur (3) und der festgelegten Normbauweise von Fahrwegen.

2. Verfahren nach Anspruch 1, **dadurch gekennzeichnet, dass** die erste Fahrspur (3) zunächst vermessen wird.

3. Verfahren nach Anspruch 1 oder 2, **gekennzeichnet durch** Bestimmen der Position (6, 7) einer Fahrspurbegrenzungslinie (4, 8) als die Position einer Fahrspur (3) des mehrspurigen Fahrweges (1).

4. Verfahren nach einem der vorhergehenden Ansprüche, **gekennzeichnet durch** Bestimmen der Position (5) der rechten Fahrwegbegrenzungslinie (2) als die Position der ersten Fahrspur (3) des mehrspurigen Fahrweges (1).

5. Verfahren nach einem der vorhergehenden Ansprüche, **gekennzeichnet durch** Bestimmen der Position (6, 7) einer weiteren Fahrspur (3) weiterhin in Abhängigkeit der Breite der Fahrspur (3).
